# EUROPEAN PATENT APPLICATION

(11) **EP 2 338 711 A1**
(43) Date of publication of application: **29.06.2011**
(21) Application number: 10196779.2
(22) Date of filing: 23.12.2010
(51) Int. Cl.: B60H 1/00, B60H 1/26

(54) **Window mounted ventilation unit**

(30) Priority: 23.12.2009 US 645935
(71) Applicant: Zeledyne, LLC, Allen Park, MI 48101 (US)
(72) Inventor: Lesle, Michael J., Toledo, OH 43611 (US); Kolokowski, Paul J., Southgate, MI 48195 (US)
(74) Representative: Giles, Ashley Simon

(57) **Abstract**

An exemplary embodiment may be directed to a ventilation system including a fan assembly coupled within said interior opening and fully supported on a window pane. The fan assembly includes a fan coupled to a motor and a flap movable from a substantially closed and sealed position to an open position, wherein the open position is characterized wherein a quantity of air can move through said fan assembly from a first side of the window pane through said flap to a second side of the window pane as directed by the rotating fan. The fan assembly also includes at least one solar collector electrically coupled to the motor for receiving and converting sunlight to electrical energy for powering the motor to rotate the fan.

## Description

### Field of the Invention

The present invention relates to ventilation systems and more specifically to a through glass ventilation system.

### Background of the Invention

The windows of a vehicle such as an automobile are typically rolled up when the vehicle is parked or unattended. If the vehicle is exposed to heat and light while parked or unattended, the passenger compartment of the vehicle can become hot and stuffy, and may cause plasticizers (additives used to increase a material's plasticity or fluidity) to outgas (i.e. volatilize) from one or more passenger compartment components. Passengers entering cars may experience discomfort associated with the heat buildup and also may experience health concerns associated with breathing in these volatized plasticizers.

To alleviate this heat buildup in the passenger compartment, passengers turn on a cooling system, or air conditioner system, provided in the vehicle. The use of a vehicle's cooling system may result in decreased fuel economy and increased emissions. Given increased environmental rules and regulations regarding vehicle emissions, such as those enacted by the California Air Resources Board (CARB), it is highly desirable to reduce heat buildup in a passenger compartment without the use of the vehicle's cooling system, or with limited use of the vehicle's cooling system, so as to reduce the load on a vehicle's cooling system, which may result in an associated increase in fuel economy and decrease in emissions. It is also highly desirable that such heat reduction occurs when the vehicle is not in use or between uses. It is also highly desirable that this heat reduction may occur using components that do not draw power from the vehicle's primary battery or charging system (i.e. a passive ventilation system), and wherein such components do not contribute significantly to a vehicle's weight or costs.

### Summary of the Invention

One exemplary embodiment may be directed to fan assembly sealingly coupled within an interior opening of a window pane that provides passive or active ventilation from one side of the window pane to the other side of the window pane. The fan assembly includes a fan rotatably coupled to a motor and a flap that opens as the fan is rotating to provide ventilation through the window pane from one side to the other. The motor may be driven by electrical energy gathered through one or more solar collectors that form a portion of the fan assembly. In addition, a battery may be electrically coupled to the one or more solar collectors to store electrical energy gathered by the one or more solar collectors for subsequent powering of the motor. Still further, a thermostat may be coupled to the motor to turn on the motor only when the temperature at the fan assembly reaches a predetermined temperature.

In a related exemplary embodiment, the fan assembly according to any of the exemplary embodiments described above in the previous paragraph may be coupled within a vehicle window pane and therefore provide ventilation between the passenger compartment and exterior of the vehicle through the window pane, preferably when the vehicle is parked or unattended. In one related exemplary embodiment, the rotating fan is configured to introduce ambient air from the exterior of the vehicle to the passenger compartment through the window pane, while in still another related exemplary embodiment, the rotating fan is configured to remove air from the passenger compartment to the exterior through the window pane. In still other related exemplary embodiments, more than one fan assembly can be added within a single window pane, or a second fan assembly could be added to a second window pane, to provide additional ventilation within the vehicle. Further, in still another related class of exemplary embodiments, multiple fans may be included within a single fan assembly coupled to a single window pane. In any of these configurations, the fan assembly preferably operates actively or passively to maintain the temperature within the passenger compartment of a vehicle below a predetermined threshold temperature when the vehicle is not in operation.

Other exemplary embodiments of the invention will become apparent from the detailed description provided hereinafter. It should be understood that the detailed description and specific examples, while disclosing exemplary embodiments of the invention, are intended for purposes of illustration only and are not intended to limit the scope of the invention.

### Brief Description of the Drawings

Figure 1 illustrates a vehicle including a fan assembly positioned within a window pane in accordance with an exemplary embodiment;
Figure 2 illustrates a close-up view of a side window pane of the vehicle of Figure 1 including a fan assembly in accordance with an exemplary embodiment;
Figure 3 is a front view of Figure 2;
Figure 4 is side section view of Figure 2 taken along line 4-4;
Figure 5 is side section view of Figure 2 taken along line 5-5; and
Figure 6 illustrates a general logic flow diagram for forming a ventilation system according to any of the exemplary embodiments.

### Detailed Description of the Invention

The exemplary embodiments may be generally directed to a fan assembly that is coupled within an opening in a window or pane of glass that provides passive and/or active ventilation of air through the glass.

In one specific group of exemplary embodiments, as described herein, a fan assembly may be coupled within one or more window panes within a vehicle and therein provide active or passive ventilation of the passenger compartment of the vehicle. Given this ventilation function, it is preferable that the fan assembly be coupled to window panes in the vehicle that do not roll down.

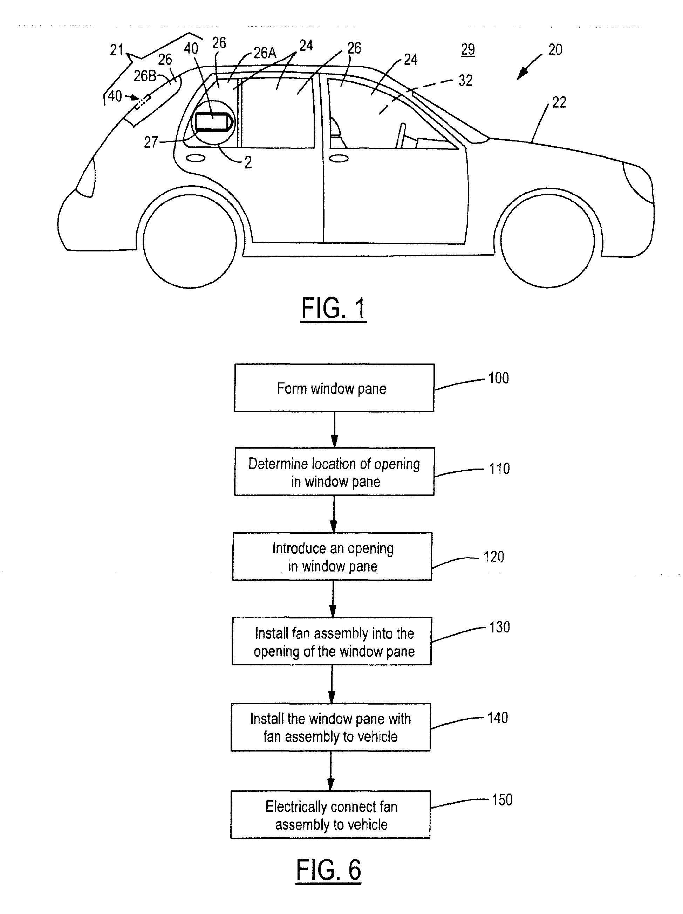

Referring now to Figure 1, a vehicle 20, here an automotive vehicle, may be illustrated as having a vehicle body 22 that includes a plurality of window openings 24 each having a respective window pane 26, wherein at least one of the window panes 26 (shown in Figure 1 as the side window pane 26A and the rear window pane 26B) includes a fan assembly 40 in accordance with one exemplary embodiment. The window panes 26 having a coupled fan assembly 40 together define a ventilation system 21 according to the exemplary embodiments.

The configuration of the vehicle body 22 having the respective window openings 24 is merely representative in nature of a virtually limitless number of possible designs for a vehicle and is therefore not intended to be limited as illustrated. For example, the vehicle 20 may have more or less window openings 24 and/or different sized or shaped window openings 24. In addition, the vehicle 20 may also have a different shape and size of the vehicle body 22. Further, the fan assembly 40 may be coupled within any one or more of the respective window panes 26 as will be described in further detail below, and is thus not limited to the window panes 26A and 26B as is illustrated in Figure 1.

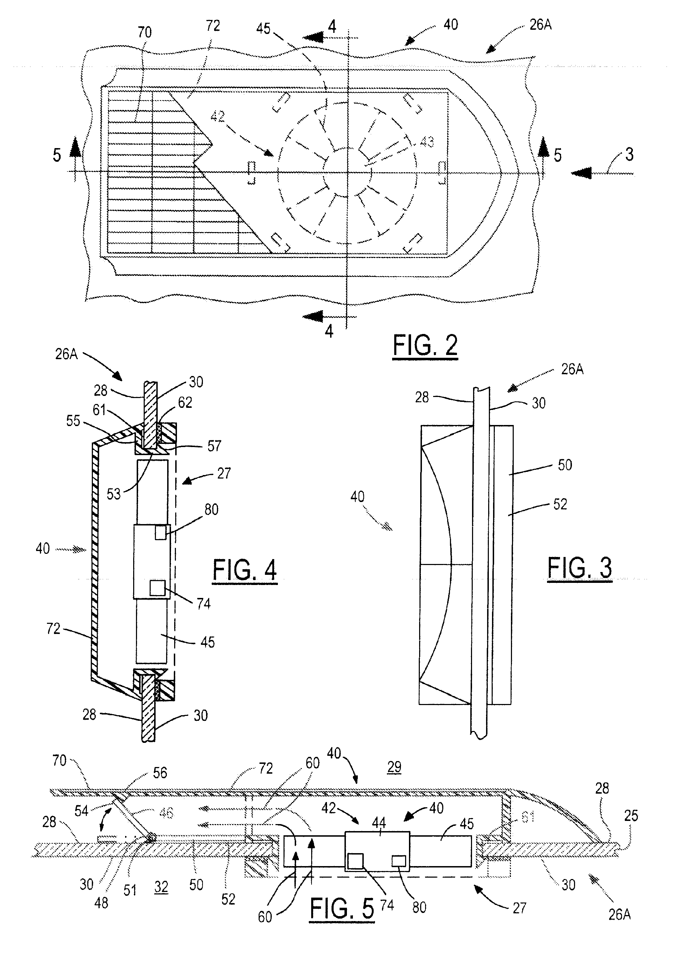

Referring now to Figures 2-5, the window pane 26 (which is representative of either side window pane 26A or rear window pane 26B, but here is a close-up view of side window pane 26A) has an exterior side 28 and an interior side 30 and a peripheral edge 25 that are sized and shaped to be mounted within the respective window opening 24. The interior side 30 of the window panes 26 and an interior portion of the vehicle body 22 together may define a passenger compartment 32 of the vehicle 20. The exterior side 28 may therefore be associated with the exterior 29 of the vehicle 20.

At least one of the window panes 26 also includes an interior opening 27 that extends from the exterior side 28 to the interior side 30 that is spaced apart from the peripheral edge 25. A fan assembly 40 according to any exemplary embodiment below may be coupled within the interior opening 27 and therefore provides ventilation between the passenger compartment 32 and the exterior 29.

The window panes 26 that are used to support the fan assemblies 40 may be formed from a wide variety of materials that are sufficiently strong to support a fan assembly 40. The interior opening 27 is typically formed by cutting the glass prior to bending or tempering.

As best shown in Figures 2, 4 and 5, each fan assembly 40 may include a fan 42 coupled to and rotatably driven by a motor 44 via a shaft (shown in phantom as 43 in Figure 2). In the embodiments shown herein, the motor 44 may be an electric motor 44. The fan assembly 40 may also include a flap 46 having a first end 48 that is affixed, such as via a pin 51 as shown in Figure 5, or otherwise coupled to a portion 50 of an assembly housing 52 and a second end 54 that may be spaced apart from the first end 48 and may be sealingly engaged with another portion 56 of the assembly housing 52. The second end 54 may therefore move from a sealed and closed position, characterized wherein the second end 54 is sealed against the portion 56 of the assembly housing 52, to an open position (the flap 46 in the open position is shown in phantom in Figure 5), characterized wherein the second end 54 is unsealed from the portion 56 of the assembly housing 52. In the open position, a quantity of air (shown by arrows 60) may move through the interior opening 27 and the fan assembly 40 between the passenger compartment 32 and the exterior 29 of the vehicle 20. The fan 42 and motor 44 may be affixed or otherwise fixedly coupled to the assembly housing 52 at a predetermined location relative to the flap 46.

In one exemplary embodiment, as best shown in Figures 4 and 5, the assembly housing 52 may include a grooved notch 53 extending from a pair of regions, or arms, 55, 57 that are coupled, preferably by snap fitting, onto the exterior side 28 and interior side 30, respectively, of a window pane 26. A seal 61, 62 may also be introduced between the assembly housing 52 and the corresponding side 28 or 30 of the window pane 26 to substantially seal the assembly housing 52 to the window pane 26. In another exemplary embodiment, the assembly housing 52 may simply be coupled to either the exterior side 28 or interior side 30 without the grooved notch and substantially sealed with a sealant (not shown) or by other means known to those of ordinary skill in the glass arts.

The shape of the fan 42 may take on many different exemplary configurations to provide air flow between the passenger compartment 32 and the exterior 29 of the vehicle 20. One exemplary fan 42, as shown in Figures 2, 4 and 5, is an axial-flow fan 42 that has a plurality of fan blades 45 that force air to move parallel to the shaft 43 about which the fan blades 45 rotate. The movement of air in the representative figures is shown by the arrows 60 - as shown in Figure 5.

The relative velocity of the air flow represented by arrows 60 may be dependent upon the size, the shape, and the number of the fan blades 45, as well as the direction and rotational speed of the shaft 43, and will be dictated by the desired amount of air flow between the passenger compartment 32 and the exterior 29. Thus, the depiction shown in Figures 2-5 is but one example of a virtually limitless number of possible exemplary embodiments with respect to the fan blades 45 and is not limited to that arrangement depicted in the Figures. In one exemplary arrangement, as shown here in Figures 2-5, the velocity of air flow as illustrated by arrows 60 may be sufficient to cause the flap 46 to move from the closed position to the open position as described above to provide ventilation between the passenger compartment 32 and exterior 29 (i.e. flap 46 may be spring-biased into a closed position).

The direction of movement of the air flow shown by arrows 60 between the passenger compartment 32 and the exterior 29 may be primarily dependent upon the relative location of the fan blades 45 relative to the flap 46. As shown in the exemplary embodiment depicted in Figures 3 and 4, the fan blades 45 are positioned relative to the flap 46 to direct the air flow from the passenger compartment 32 through the opening 27 including the fan assembly 40, through the flap 46 (in the open position), and to the exterior 29 of the vehicle 20. In other alternative exemplary embodiments (not shown), however, the opposite may occur, wherein the fan blades 45 are positioned relative to the flap 46 to direct air flow in the opposite direction from the exterior 29, through the flap 46 (in the open position), through the opening 27 including the fan assembly 40 and into the passenger compartment 32.

As stated above, the fan 42 may be driven by an electric motor 44 that is preferably coupled to a plurality of solar cells 70. The solar cells 70, or photo voltaic cells, may be mounted directly to a portion of the assembly housing 52 and directly exposed to sunlight, or mounted on or beneath a transparent top panel 72 of the assembly housing 52, and may be electrically connected in series to increase the voltage provided to the electric motor 44 or, alternatively, to a storage battery 74 that may be electrically coupled to the electric motor 44. The electric motor 44 may therefore be either a DC or AC electric motor 44, it being understood that the fan assembly 40 would include circuitry to convert DC power of the solar cells 70 to an alternating current if an AC electric motor 44 was used. The fan assembly 40 may also include a switch (not shown) for turning the electric motor 44 on and off. The fan 42 may be constructed to induce air flow through the flap 46 in the direction indicated by arrows 60 as described above.

The fan assembly 40 may also include a thermostat 80 that is electrically coupled to the electric motor 44 directly, or is electrically coupled to the electric motor 44 through the storage battery 74. The thermostat 80 measures the temperature of the fan assembly 40, which correlates by some factor to the temperature in the passenger compartment 32. The electric motor 44 may therefore be turned on, or turned off, as directed by the thermostat 80, depending upon the determined temperature within the passenger compartment 32.

While the exemplary embodiment illustrated in Figure 1, as described in further detail by Figures 2-5, illustrates a single fan assembly 40 coupled within the side window pane of the vehicle 20 that ventilates air between the passenger compartment 32 to the exterior 29, multiple alternative exemplary arrangements are contemplated herein. For example, additional fan assemblies 40 may be coupled within respective other window panes (such as the back window pane 26B or other side window pane 26A), wherein the fan 42 associated therewith may be configured to provide air flow between the passenger compartment 32 and the exterior 29.

Also, it is specifically contemplated that multiple fan assemblies 40 may be located within a single window pane 26. Thus, for example, a first fan assembly 40 may be located near a lower left portion of a single window pane 26, while a second fan assembly 40 may be located near an upper right portion of the same window pane 26. The second fan assembly 40 may include a fan blade 45 configuration relative to its flap 46 to direct air flow in the same manner as the first fan assembly 40 (i.e. wherein the air flow in both fan assemblies 40 proceeds outward from the passenger compartment 32 to the exterior 29, or alternatively wherein the air flow from both fan assemblies 40 proceeds inward to the passenger compartment 32 from the exterior 29) or in the opposite manner (one moving air into the passenger compartment 32 while the second fan assembly 40 moves air out of the passenger compartment 32).

In still another alternative exemplary embodiment, multiple fans 42 may be included within a single fan assembly 40, wherein each of the fans 42 may have its fan blades 45 positioned to provide air flow in a single direction (i.e. from the passenger compartment 32 to the exterior 29 or from the exterior 29 to the passenger compartment 32) or in alternative directions (i.e. wherein at least one of the fans 42 in a single fan assembly 40 directs air from the passenger compartment 32 to the exterior 29, while at least one other fan 42 directs air from the exterior 29 to the passenger compartment 32).

In yet another exemplary embodiment, the motor 44 may be powered by electricity supplied by the vehicle battery (not shown), as opposed to electricity supplied ultimately from one or more solar cells 70 (with or without a storage battery 74), or may be powered by both the vehicle battery and storage battery 74, or alternatively from the vehicle battery or storage battery 74. In the latter embodiment, the motor 44 may utilize the vehicle battery as a backup supply of electricity when the solar cells 70 and/or storage battery are unable to supply electricity to the motor 44 as needed, such as when it is dark outside, raining or otherwise too overcast to generate sufficient electricity.

In any of the above group of alternative exemplary embodiments, it is specifically contemplated that a thermostat 80 may be coupled within one or more of the fan assemblies 40 to provide an on/off control for the respective motors 44 when the measured temperatures (and hence the determined passenger compartment 32 temperature) is below, at, or above a predetermined threshold temperature.

In yet another group of exemplary embodiments, the flap 46 may be configured to be opened and closed independently of air flow movement shown by arrows 60 as generated by the rotating fan 42. For example, the flap 46 may be manually or electronically controlled, particularly in vehicles 20 where the ultimate strength of the air movement resulting from the rotating fan blades 45 may be insufficient to open the flap 46 under normal circumstances to provide adequate ventilation. The flap 46 may therefore be constructed in a more robust manner (either in thickness or material choice) than may be obtainable in systems requiring air movement alone to control the opening and closing of the flap 46. For manual control, an actuator knob or switch (not shown) coupled within the passenger compartment 32 may be manually turned on or off by the driver of the vehicle upon exiting the vehicle 20. For electronic control, an electronic switch (not shown) located in the fan assembly 40 (wherein the switch may be electrically coupled to the solar cells 70 directly, or indirectly through the storage battery 74, and/or to the vehicle battery) may release the flap 46 under a predetermined set of circumstances, such as when the thermostat 80 indicates a predetermined temperature and/or when the motor 44 is actuated.

Figure 6 illustrates a general logic flow diagram for forming the ventilation system of the exemplary embodiments according to an exemplary method.

Referring first to step 100, a window pane may be formed to a desired shape and size to match a corresponding window opening on the vehicle. The method for manufacturing the window pane is dependent upon the materials chosen for use. For glass window panes or plastic window panes, any number of manufacturing methods well known to those of ordinary skill in the art may be utilized.

Next, in step 110, a location is determined as to where to introduce an interior opening within the window pane that is used as a coupling point for the fan assembly. The location of the opening is determined based on many factors. For example, the location of the interior opening may be sufficiently inward of the peripheral edge to provide sufficient strength to support the yet to be coupled fan assembly. Moreover, the location of the interior opening may be determined to provide adequate ventilation. In addition, the location of the opening should be situated in an area of the window pane that does not unduly impair a driver's ability to navigate the vehicle during use.

In step 120, the interior opening determined in step 110 is introduced within the window pane. For a plastic window pane, this opening may be introduced during the manufacture of the window pane or afterward. For a glass window pane, the opening may be introduced by drilling, water jet cutting, routing, laser cutting or other known fabrication techniques prior to any tempering step. The window may subsequently be tempered to a desired toughness.

Next, in step 130, the preassembled fan assembly is coupled within the interior opening of the window pane and sealed as desired. Adhesives, mechanical interlocking, or conventional fasteners may all be used.

In step 140, the window pane is introduced within the window opening of the vehicle.

Finally, in step 150, the fan assembly may be electrically coupled to the any powering unit of the vehicle (other than the already coupled solar cells), such as the vehicle battery if needed. The fan assembly is ready for use.

In an alternative exemplary method, the fan assembly may be introduced to the window pane after the window pane is introduced within the window opening of the vehicle. Also, one or more portions of the fan assembly may be introduced to the fan assembly after coupling to the window pane (i.e. at least a portion of the fan assembly is not preassembled).

In an exemplary operation for a vehicle including a fan assembly. 40 according to the exemplary embodiments described herein, when the vehicle 20 is not in use, the electric motor 44 may be powered by electricity to rotate shaft 43, which in turn rotates the fan 42. The electricity may be provided directly from the solar cells 70 to the motor 44, or indirectly from the solar cells 70 through the storage battery 74, and/or through the vehicle battery, depending upon the exemplary embodiment. The rotation of the fan 42 causes air movement through the fan blades 45 towards the flap 46 (shown by arrows 60). When the velocity of air movement on the flap 46 is sufficiently high (i.e. when the fan 42 is rotating at sufficient rotational speed to induce air movement towards the flap 46 at a predetermined velocity), the flap 46 may move from the closed position to the open position, therein allowing the air to flow into, or out of, the passenger compartment 32, depending upon the location of the fan blades 45 relative to the flap 46. Alternatively, as described above, the flap 46 may be directed open independent of the rotation of the fan 42 by a coupled controller, but in conjunction with the rotation of the fan 42, to provide the required air movement. The opening of the flap 46 and rotation of the fan blades 46 to generate the requisite air movement 60 may allow the temperature within the passenger compartment 32 to be maintained at a lower temperature, or may allow the temperature of the passenger compartment 32 to be cooled, depending upon the relative location of the fan blades 45 relative to their flaps 46 in the coupled fan assemblies 40.

When the vehicle 20 is subsequently used, the amount of power required from vehicle's air conditioning system to cool the passenger compartment 32 to a desired temperature may therefore be lessened. This may result in less vehicle emissions associated with the cooling system usage. In addition, given that fuel economy for vehicles may be dependent upon the extent of cooling system use, an increase in fuel economy for the vehicle 20 may also be achieved.

In addition, by maintaining a cooler temperature within the passenger compartment 32 at all times, a decrease in the amount of out gassing, or volatilization, of plasticizers contained within various passenger compartment components (such as seats, dashboards, or carpeting) may be achieved. This decrease in volatilization of the plasticizers may provide an increased health benefit to passengers associated with the lower amounts of volatized plasticizers.

When a thermostat 80 is coupled within the fan assembly 40, and wherein the measured temperature of the fan assembly 40, which correlates to a temperature in the passenger compartment 32, is below a predetermined threshold temperature, the thermostat 80 may direct the electric motor 44 to an off position, or may alternatively interrupt the supply of electricity to the motor 44 by other means, which therein prevents the rotation of the shaft 43 and fan blades 45. In this circumstance, electricity generated from sunlight entering the solar cells 70 may be stored in the storage battery 74. This stored electrical energy may be subsequently used to drive the motor 44 in conditions were the temperature of the passenger compartment, as determined by the thermostat 80, reaches a predetermined threshold level and wherein sunlight is not available to the solar cells 70 to generate electricity to power the motor 44.

Other exemplary embodiments of the invention will become apparent from the detailed description provided hereinafter. It should be understood that the detailed description and specific examples, while disclosing exemplary embodiments of the invention, are intended for purposes of illustration only and are not intended to limit the scope of the invention.

## Claims

1. A ventilation system comprising:
a window pane having a first side and a second side and a peripheral edge, said window pane including an interior opening extending between said first side and said second side and spaced from said peripheral edge;
a fan assembly coupled within said interior opening and fully supported on said window pane, said fan assembly including a fan coupled to a motor, said motor capable of being powered to rotate said fan, said fan assembly further including a flap movable from a substantially closed and sealed position to an open position, wherein said open position is characterized wherein a quantity of air can move through said fan assembly from said first side through said flap to said second side as directed by said rotating fan, said fan assembly further including at least one solar collector electrically coupled to said motor for receiving and converting sunlight to electrical energy for powering said motor to rotate said fan.

2. The ventilation system of claim 1, wherein said flap is movable from said substantially closed and sealed position to said open position when a fan rotational speed reaches a predetermined threshold speed.

3. The ventilation system of claim 1, wherein said fan assembly further comprises a thermostat electrically coupled to said motor, said thermostat capable of measuring a temperature within said fan assembly, said thermostat capable of directing said motor between an on position and an off position as a function of said measured temperature, wherein said on position allows said motor to be powered to rotate said fan and wherein said off position prevents said motor from being powered to rotate said fan.

4. The ventilation system of claim 1, wherein said fan assembly further comprises a battery electrically coupled to said at least one solar collector and said motor, said battery capable of storing said electrical energy from said at least one solar collector and subsequently providing said electrical energy for powering said motor to rotate said fan.

5. A vehicle comprising:
a vehicle body having a plurality of window openings;
a window pane coupled within each respective one of said plurality of window openings, each of said respective window panes including an interior side and an exterior side and a peripheral edge, said interior side being associated with a passenger compartment of the vehicle and said exterior side being associated with an exterior of the vehicle,
at least one of said window panes including an interior opening extending between said first side and said second side and spaced apart from said peripheral edge;
a fan assembly coupled within said interior opening and fully supported on said window pane, said fan assembly including a fan coupled to a motor, said motor capable of being powered to rotate said fan, said fan assembly further including a flap movable from a substantially closed and sealed position to an open position, wherein said open position is characterized wherein a quantity of air can move through said fan assembly between said passenger compartment and said exterior of the vehicle as directed by said rotating fan.

6. The vehicle of claim 5, wherein said rotating fan is configured to move air from said passenger compartment to said exterior.

7. The vehicle of claim 5, wherein said rotating fan is configured to introduce air to said passenger compartment from said exterior.

8. The vehicle of claim 5, wherein said fan assembly includes at least one solar collector electrically coupled to said motor for receiving and converting sunlight to electrical energy for powering said motor to rotate said fan.

9. The vehicle of claim 8, wherein said fan assembly further comprises a battery electrically coupled to said at least one solar collector and said motor, said battery capable of storing said electrical energy from said at least one solar collector and subsequently providing said electrical energy to power said motor to rotate said fan.

10. The vehicle claim 5, wherein said fan assembly further comprises a thermostat electrically coupled to said motor, said thermostat capable of directing said motor between an on position and an off position as a function of said measured temperature, wherein said on position allows said motor to be powered to rotate said fan and wherein said off position prevents said motor from being powered to rotate said fan.

11. The vehicle of claim 5 further comprising a second fan assembly coupled within an interior portion of another of said window panes, said second fan assembly including a second fan coupled to a second motor, said second motor capable of being powered to rotate said second fan, said second fan assembly further including a second flap movable from a substantially closed and sealed position to an open position, wherein said open position is characterized wherein a quantity of air can move between said interior portion and said exterior as directed by said rotating fan.

12. The vehicle of claim 5, further comprising:
a second fan assembly coupled within a second interior opening in said window pane, said second fan assembly including a second fan coupled to a second motor, said second motor capable of rotating said second fan, said second fan assembly further including a second flap movable from a second substantially closed and sealed position to a second open position, wherein said second open position is characterized wherein a quantity of air can move through said second fan assembly between said passenger compartment and said exterior of the vehicle as directed by said rotating second fan.

13. A method for ventilating a passenger compartment of a vehicle with an exterior of the vehicle when the vehicle is not in operation, the method comprising:
providing the vehicle having a plurality of window openings;
mounting a window pane within each respective one of said plurality of window openings, said window pane having a first side and a second side and a peripheral edge, said second side being associated with the exterior of the vehicle and said first side being associated with the passenger compartment of the vehicle;
introducing an interior opening within at least one of said window panes and spaced from said peripheral edge, said interior opening extending from said first side to said second side;
coupling a fan assembly within said at least one interior opening, said fan assembly including a fan coupled to a motor, said fan assembly further including a flap movable from a substantially closed and sealed position to an open position; and
powering said motor to rotate said fan to allow a quantity of air to move between the passenger compartment and the exterior of the vehicle when said flap is in said open position.

14. The method of claim 13 further comprising:
coupling at least one solar collector to said fan assembly;
electrically coupling said at least one solar collector to said motor;
receiving sunlight within said at least one solar collector; and
converting said sunlight to electrical energy, wherein said electrical energy is used to power said motor to rotate said fan.

15. The method of claim 13 further comprising:
electrically coupling a battery to said at least one solar collector and to said motor;
storing said quantity of electrical energy supplied by said at least one solar collector; and
introducing said quantity of electrical energy from said battery to said motor to power said motor to rotate said fan.
